# EUROPEAN PATENT APPLICATION

(11) **EP 2 575 337 A1**
(43) Date of publication of application: **03.04.2013**
(21) Application number: 11290449.5
(22) Date of filing: 29.09.2011
(51) Int. Cl.: H04M 3/42, H04L 29/06

(54) **Method for setting-up a telephone call, corresponding telephone server and telephone terminal**

(71) Applicant: Alcatel Lucent, 75007 Paris (FR)
(72) Inventor: Van Broeck, Marc, 2860 Sint-Katelijne Waver Antwerpen (BE); Lou, Zhe, 2000 Antwerpen (BE); Van den Broeck, Sigurd, 2980 Zoersel (BE)
(74) Representative: Plas, Axel Ivo Michel

(57) **Abstract**

When setting-up a telephone call between a calling party (101) and a called party (103), a pre-recorded voice message of the calling party (101) is transferred to the telephone terminal (104) of the called party (103). The pre-recorded voice message of the calling party (101) is used as a ringtone by the telephone terminal (104) to announce the telephone call. The ringtone may be uploaded or streamed to the terminal of the called party and may indicate the urgency or importance of the ensuing call.

## Description

### Field of the Invention

The present invention generally relates to setting-up a telephone call. The invention more particularly addresses the problem of announcing an important or urgent call, for instance at a point in time where the called party is not answering incoming telephone calls because he/she is busy or prefers not to be disturbed.

### Background of the Invention

When a called party is in meeting or busy and doesn't like to be disturbed, he/she will not answer incoming calls. An incoming call however may be urgent or important. If the called party would know the urgency or importance of such an incoming call, he/she would have answered the incoming call, e.g. while leaving the meeting room.

Most telephone terminals enable to configure personalized ringtones. Such personalized ringtones identify the calling party or the terminal from which an incoming call is originating. Although such personalized ringtones identify the source of a call, i.e. the calling party or terminal, they do not indicate the urgency or importance of the call. Since only the called party can associate a certain sound as ringtone with a particular caller, it is not possible to distinguish urgent calls of that caller from non-urgent calls of that same caller.

In order to notify the urgency or importance of a call, the calling party can send a message, e.g. a Short Message Service (SMS) message, or the calling party can leave a voice message on the called party's voicemail requesting the called party to call back regarding an urgent issue. The calling party however is left unsure about the called party consulting his/her text messages and/or voicemails.

Yet another existing solution consists in activating a Push-To-Talk (PTT) call. PTT is supported over mobile cellular networks and enables mobile network users to use their mobile telephone terminal as walkie-talkie. Although PTT enables a calling party to reach one or more called parties almost instantly, PTT calls provide half-duplex communication, i.e. communication wherein one party at a time transmits while all other parties receive. One of the other parties can transmit as soon as the transmitting party unkeys his/her PTT button.

In summary, existing solutions either rely on the telephone communication protocol that requires dialling, network switching, call setup and waiting for the called party to answer the call. It is not possible to establish immediate connection in case of urgency, and existing mechanisms like ringtone configuration do not allow to distinguish urgent from non-urgent calls. Alternative solutions rely on text or voice messaging that do not guarantee acceptance by the called party, or instant communication protocols like PTT that are half-duplex.

It is an objective of the present invention to disclose a method for setting-up a telephone call that overcomes the above mentioned drawbacks of existing solutions. More particularly, it is an objective of the present invention to disclose a method for setting-up a full-duplex telephone call with the ability to indicate urgency or importance to the called party. It is a further objective of the present invention to disclose a corresponding telephone server and telephone terminal equipped to support the method for setting-up a telephone call according to the invention.

### Summary of the Invention

According to the invention, the above mentioned objectives are realized by the method for setting-up a telephone call between a calling party and a called party defined by claim 1, the method comprising transferring a real-time voice message of the calling party to a telephone terminal of the called party for use as ringtone by the telephone terminal to announce the telephone call.

Thus, the present invention enables the calling party to adapt the ringtone of the called party's telephone terminal on a per-call basis. As part of the set-up procedure of a telephone call, the calling party shall transmit a voice message that will be activated as ringtone on the called party's terminal for that particular telephone call. This way, the called party is enabled to differentiate urgent or important telephone calls from other calls, even when he/she is busy or doesn't like to be disturbed for non-urgent matters.

Optionally, as defined by claim 2, the method for setting-up a telephone call according to the current invention in a first embodiment may comprise the steps of:
- recording and temporarily storing the real-time voice message in a telephone server;
- uploading the real-time voice message from the telephone server to the telephone terminal and activating the real-time voice message as uploaded ringtone;
- initiating the telephone call with the uploaded ringtone; and
- automatically removing the real-time voice message from the telephone terminal and the telephone server upon termination of the telephone call.

Thus, a first embodiment of the invention consists in recording a voice message in a central server where it is temporarily stored, installing the voice message as ringtone on the destination terminal from the central server, and initiating the telephone call. Instead of his/her normal ringtone, the called party shall hear the recorded voice message and shall answer the call when he/she notices that urgency is involved. As soon as the telephone call is ended, i.e. as a result of one party ending the call or a connection drop due to signal loss or network outage, the voice message is cleared from the destination terminal and from the central server.

As is further defined by claim 3, the method for setting-up a telephone call according to the current invention in a second embodiment may further comprise the steps of:
- initiating the telephone call;
- streaming the real-time voice message from the calling party to the called party as part of the telephone call; and
- using the real-time voice message as ringtone for the telephone call in the telephone terminal of the called party.

Thus, in a variant second embodiment of the invention, the voice message isn't stored in a central server but instead live streamed from the calling party's terminal to the called party's terminal where it replaces the normal ringtone. Again, the called party shall hear the voice message, notice the urgency or importance thereof, and answer the telephone call. As soon as the call is ended, the normal ringtone is again re-activated on the called party's terminal.

According to an optional aspect of the present invention, defined by claim 4, the real-time voice message is indicative for urgency or importance of the telephone call.

Indeed, since the voice message will be used as ringtone, the voice message preferably contains an indication of the urgency, like for instance "I urgently want to talk to you regarding our latest project since we have a huge problem right now".

In addition to a method for setting-up a call, the present invention also relates to a telephone server for setting-up a telephone call between a calling party and a called party, as defined by claim 5, the telephone server comprising:
- means for receiving a real-time voice message from the calling party;
- means for temporarily storing the real-time voice message;
- means for uploading the real-time voice message onto a telephone terminal of the called party;
- means for activating the real-time voice message as ringtone on the telephone terminal of the called party;
- means for initiating the telephone call; and
- means for removing the real-time voice message from the telephone terminal and the telephone server upon termination of the telephone call.

Such telephone server which is needed to implement a first embodiment of the invention, thus contains a memory or database for temporarily storing voice messages that are recorded and uploaded by callers. The telephone server further contains circuitry and/or software for establishing connectivity with the destination terminal of a call and for installing the voice message on this destination terminal as ring tone prior to initiating the telephone call. The telephone server thereafter may be involved in initiating the call between calling party and called party. Upon termination of the call, the server deletes the voice message from its memory and instructs the destination terminal to also delete the voice message and re-activate the normal ringtone.

Additional to the method and telephone server, the present invention also relates to a telephone terminal with adaptable ringtone for incoming calls as defined by claim 6, the telephone terminal comprising means for temporarily using a real-time voice message from a calling party as ringtone.

Indeed, the present invention requires a dedicated terminal with adaptable ringtone that can be replaced by a caller or a telephone server with a caller generated voice message.

A first embodiment of the telephone terminal according to the present invention, defined by claim 7, comprises:
- means for receiving from a telephone server the real-time voice message pre-recorded by the calling party;
- means for temporarily storing the real-time voice message;
- means for activating the real-time voice message as ringtone for an incoming telephone call from the calling party; and
- means for automatically removing the real-time voice message upon termination of the telephone call.

A second embodiment of the telephone terminal according to the present invention, defined by claim 8, comprises:
- means for activating as ringtone a real-time voice message stream received from the calling party after initiation of a telephone call.

It is noticed that both the first embodiment and the second embodiment of the present invention may be available on a single telephone terminal.

Preferably, as defined by claim 9, the telephone terminal according to the current invention further comprises:
- means for enabling and disabling usage of a real-time voice message from a calling party as ringtone.

This way, the user of the telephone terminal can either enable or disable his/her device for receiving real-time voice as ringtone. Enabling and disabling this function may be configurable per single user. In other words, a user can allow certain friend or relatives to submit voice as ringtone on his/her device for urgent calls but may disallow all other people from using this function on his/her device.

### Brief Description of the Drawings

Fig. 1 illustrates a first embodiment of the method for setting-up a telephone call according to the present invention; and

Fig. 2 illustrates a second embodiment of the method for setting-up a telephone call according to the present invention.

### Detailed Description of Embodiment(s)

Usually, when a first person 101 calls a second person 103, the called person 103 doesn't know the urgency or importance of the incoming call. If the called person 103 is busy or doesn't want to be disturbed, he might not answer the phone whereas he would answer the phone if he would know the urgency of the call.

The basic idea of the current invention is that the calling party 101 is given the possibility to record a voice message that will be used as the ringtone for the person 103 he tries to call. The voice message can then be used to indicate the urgency of the call.

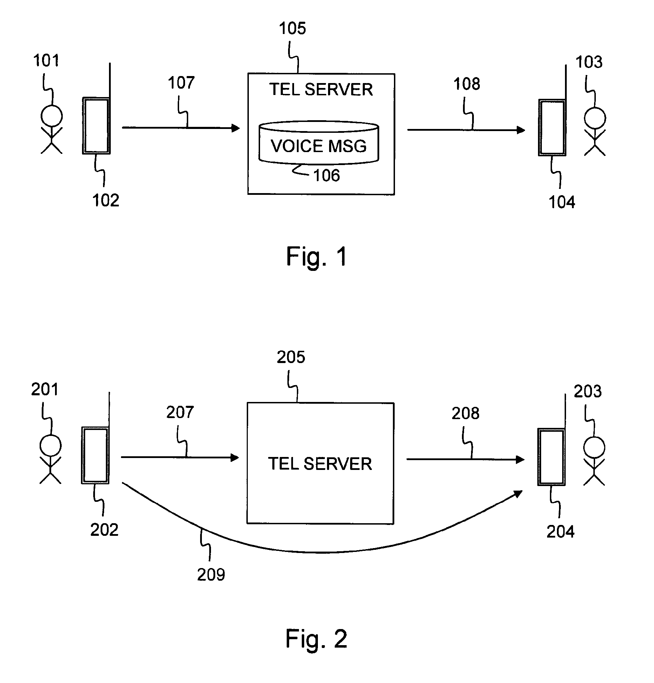

Fig. 1 illustrates a scenario wherein a first embodiment of the invention is followed. A first person 101 wants to call from his phone 102 a second person 103 on an urgent matter from. Since the first person 101 really wants the second person 103 to pick up his phone 104, the first person 101 records a short voice message, e.g. "Hello, I urgently want to talk to you regarding our latest project since we have a huge problem right now". The first person 101 thereupon dials the second person's telephone number. As is indicated by 107 in Fig. 1, his recorded voice message is uploaded into a central telephone server, TEL SERVER or 105, where it is temporarily stored in a voice message memory, VOICE MSG or 106. The telephone server 105 subsequently connects to the second person's telephone terminal 104 and installs the voice message this phone 104. Thereafter, the telephone server 105 initiates the phone call from the calling party 101 to the called party 103. This is indicated by arrow 108 in Fig. 1. The telephone terminal 104 start to ring, but instead of the normal ringtone, the called party 103 shall hear the recorded voice message "Hello, I urgently want to talk to you regarding our latest project since we have a huge problem right now". The second person 103 will surely answer the call now since it is alerted via the ringtone that a big problem at work has occurred. When the call is terminated, the voice message is cleared from telephone terminal 104 and from the telephone server's memory 106.

The ringtone is stored at the server side in memory or in a quickly accessible file system 106. At the client side, the ringtone is stored temporarily where all other downloaded and locally stored ringtones are stored. Some security key has to be given to the operator so that he is allowed to store and delete ringtones on the mobile terminal 104. The security key should be such that an operator only can remove only those ringtones that he has installed on the mobile terminal 104.

Fig. 2 illustrates a second embodiment of the invention wherein a calling party 201 makes an urgent call from his phone 202 to the telephone terminal 204 of a called party 203. Again, the calling party 201 records a voice message. The recorded voice message isn't stored on the server 205 this time but instead is live streamed from the caller's phone device 202 to the called party's telephone terminal 204 where the streamed voice message replaces the normal ringtone. In this second scenario the caller 201 dials the called party's telephone number, as is indicated by arrow 207. The call is initiated through telephone switching circuitry or a telephone server 205 as is indicated by arrow 208. When the calling party 201 hears the ringtone he just starts to speak. The calling party's voice will be live streamed to telephone terminal 204 replacing the normal ringtone with the streamed voice message. This is indicated by arrow 209 in Fig. 2. Again, the called party 203 will answer the call since it is alerted through the live streamed voice message that person 201 wants to speak him urgently.

It is noticed that both in the first embodiment and the second embodiment described here above, it is desirable that the user 103 or 203 can enable or disable his device 104 or 204 for real-time voice as a ringtone. This may be configurable on a per single user base. As such the person 101 can use voice as a ringtone on the telephone terminal 104 of person 103 but other people can't.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The above described embodiments are therefore to be considered in all respects as illustrative and not restrictive, the scope of the invention being defined by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences different from the one(s) described or illustrated above.

## Claims

1. A method for setting-up a telephone call between a calling party (101; 201) and a called party (103; 203),
**CHARACTERISED IN THAT** said method comprises transferring a real-time voice message of said calling party (101; 201) to a telephone terminal (104; 204) of said called party (103; 203) for use as ringtone by said telephone terminal (104; 204) to announce said telephone call.

2. A method for setting-up a telephone call according to claim 1, said method comprising the steps of:
- recording and temporarily storing (107) said real-time voice message in a telephone server (105);
- uploading said real-time voice message from said telephone server (105) to said telephone terminal (104) and activating said real-time voice message as uploaded ringtone;
- initiating (108) said telephone call with said uploaded ringtone; and
- automatically removing said real-time voice message from said telephone terminal (104) and said telephone server (105) upon termination of said telephone call.

3. A method for setting-up a telephone call according to claim 1, said method comprising the steps of:
- initiating said telephone call;
- streaming (209) said real-time voice message from said calling party (201) to said called party (203) as part of said telephone call; and
- using said real-time voice message as ringtone for said telephone call in said telephone terminal (204) of said called party (203).

4. A method according to claim 1, wherein said real-time voice message is indicative for urgency or importance of said telephone call.

5. A telephone server (105) for setting-up a telephone call between a calling party (101) and a called party (103), said telephone server (105) comprising:
- means for receiving a real-time voice message from said calling party (101);
- means (106) for temporarily storing said real-time voice message;
- means for uploading said real-time voice message onto a telephone terminal (104) of said called party (103);
- means for activating said real-time voice message as ringtone on said telephone terminal (104) of said called party (103);
- means for initiating said telephone call; and
- means for removing said real-time voice message from said telephone terminal (104) and said telephone server (105) upon termination of said telephone call.

6. A telephone terminal (104; 204) with adaptable ringtone for incoming calls, **CHARACTERIZED IN THAT** said telephone terminal (104; 204) comprises means for temporarily using a real-time voice message from a calling party (101; 201) as ringtone.

7. A telephone terminal (104) according to claim 6, comprising:
- means for receiving from a telephone server (105) said real-time voice message pre-recorded by said calling party (101);
- means for temporarily storing said real-time voice message;
- means for activating said real-time voice message as ringtone for an incoming telephone call from said calling party (101); and
- means for automatically removing said real-time voice message upon termination of said telephone call.

8. A telephone terminal (204) according to claim 6, comprising:
- means for activating as ringtone a real-time voice message stream received from said calling party (201) after initiation of a telephone call.

9. A telephone terminal (104; 204) according to claim 6, further comprising:
- means for enabling and disabling usage of a real-time voice message from a calling party (101; 201) as ringtone.
